(19) **Europäisches Patentamt**
**European Patent Office**
**Office européen des brevets**

(11) **EP 1 412 703 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **02760249.9**

(22) Anmeldetag: **18.07.2002**

(51) Int Cl.:
***G01D 5/24*** *(2006.01)*

(86) Internationale Anmeldenummer:
**PCT/EP2002/007974**

(87) Internationale Veröffentlichungsnummer:
**WO 2003/010495 (06.02.2003 Gazette 2003/06)**

(54) **SCHALTUNGSANORDNUNG FÜR EINEN KAPAZITIVEN SENSOR**

CIRCUIT CONFIGURATION FOR A CAPACITIVE SENSOR

ENSEMBLE CIRCUIT POUR UN CAPTEUR CAPACITIF

(84) Benannte Vertragsstaaten:
**AT BE CH CY DE DK ES FI FR GB GR IE IT LI LU MC NL PT SE TR**

(30) Priorität: **20.07.2001 DE 10134680**

(43) Veröffentlichungstag der Anmeldung:
**28.04.2004 Patentblatt 2004/18**

(73) Patentinhaber: **Endress + Hauser GmbH + Co. KG 79689 Maulburg (DE)**

(72) Erfinder: **LALLA, Robert 79541 Lörrach (DE)**

(74) Vertreter: **Andres, Angelika Maria et al Endress+Hauser (Deutschland) AG+Co. KG PatServe Colmarer Strasse 6 79576 Weil am Rhein (DE)**

(56) Entgegenhaltungen:
**EP-A- 0 922 962**

• **MATSUMOTO H ET AL: "A SWITCHED-CAPACITOR DIGITAL CAPACITANCE METER" IEEE TRANSACTIONS ON INSTRUMENTATION AND MEASUREMENT, IEEE INC. NEW YORK, US, Bd. IM-35, Nr. 4, 1. Dezember 1986 (1986-12-01), Seiten 555-559, XP002063455 ISSN: 0018-9456**

**Beschreibung**

Die Erfindung betrifft eine Schaltungsanordnung für einen kapazitiven Sensor sowie ein Verfahren zum Einstellen einer eine veränderliche physikalische Meßgröße, insb. einen statischen Druck eines Fluids, momentan repräsentierenden Signalspannung.

In der EP-A 922 962 ist eine Schaltungsanordnung für einen kapazitiven Sensor gezeigt, die umfaßt:

- einen Meßkondensator von veränderlicher Kapazität, die mittels einer zu detektierenden physikalischen Meßgröße eingestellt ist, welcher Meßkondensator eine zur momentan eingestellten Kapazität proportionale Ladung trägt,
- einen entladenen Referenzkondensator und
- einen invertierenden Verstärker
- von dem ein Eingang und ein Ausgang über den Referenzkondensator miteinander verbunden sind,
- wobei der Eingang des Verstärkers temporär mit dem Meßkondensator so gekoppelt ist,

      --- daß die Ladung vom Meßkondensator möglichst vollständig auf den Referenzkondensator übertragen wird und
      --- daß der Ausgang des Verstärkers eine Signalspannung liefert, die im wesentlichen proportional zur Kapazität des Meßkondensators ist.

Als nachteilig bei einer derartigen Schaltungsanordnung hat sich u.a. erwiesen, daß die auf den Meßkondensator aufgetragene Ladung von dessen momentaner Kapazität abhängig ist und somit eine Stromaufnahme der Schaltungsanordnung im Betrieb über einen weiten Bereich schwanken kann. Die Stromaufnahme kann dabei, insb. auch für den nicht auszuschließenden Fall eines Kurzschlusses innerhalb des Meßkondensators, unerwünscht hohe Wert annehmen.

Ein weiterer Nachteil vorgenannter Schaltungsanordnung besteht bei deren Verwendung in einem kapazitiven Druck-Sensor des weiteren auch darin, daß die abgegebene Signalspannung proportional zur Kapazität des Meßkondensators und somit nicht proportional zur detektierten Meßgröße ist.

Eine Aufgabe der Erfindung ist es daher, eine, insb. für einen kapazitiven Sensor geeignete, Schaltungsanordnung anzugeben, die eine von der momentane Kapazität des Meßkondensators praktisch unabhängige Stromaufnahme aufweist und die eine von einem Kehrwert der Kapazität des Meßkondensators abhängige Signalspannung liefert.

Zur Lösung der Aufgabe besteht die Erfindung in einer Schaltungsanordnung für einen kapazitiven Sensor, die umfaßt:

- einen bis auf eine vorgebbare Restladung entladenen ersten Meßkondensator von veränderlicher Kapazität, die mittels einer zu detektierenden physikalischen Meßgröße eingestellt ist,
- einen eine Referenzladung tragenden ersten Referenzkondensator und
- einen ersten Pufferverstärker

      -- von dem ein Eingang mit dem ersten Meßkondensator zumindest temporär so gekoppelt ist, daß
      -- ein Ausgang des ersten Pufferverstärkers eine erste Signalspannung liefert, die im wesentlichen proportional zu einer am ersten Meßkondensator auftretenden Meßspannung ist,

- wobei Eingang und Ausgang des ersten Pufferverstärkers im Betrieb über den ersten Referenzkondensator temporär miteinander so gekoppelt sind, daß die Referenzladung vom ersten Referenzkondensator möglichst vollständig auf den ersten Meßkondensator übertragen wird.

Des weiteren besteht die Erfindung in einem Verfahren zum Einstellen einer Signalspannung, die eine veränderliche physikalische Meßgröße, insb. einen statischen Druck eines Fluids, momentan repräsentiert, welches Verfahren folgende Schritte umfaßt:

- Bewirken einer mit einer Änderung der Meßgröße korrespondierenden Änderung einer Kapazität eines verstellbaren Meßkondensators,
- Entladen des Meßkondensators auf eine vorgebbare Restladung,
- Erzeugen einer Referenzladung auf einem Referenzkondensator,
- Umladen der Referenzladung vom Referenzkondensator auf den Meßkondensator zum Erzeugen einer dessen Kapazität momentan repräsentierenden Meßspannung sowie
- Verstärken der Meßspannung mit einer Verstärkung von etwa eins zum Erzeugen der Signalspannung.

Nach einer ersten bevorzugten Ausgestaltung der Erfindung umfaßt die Schaltungsanordnung zum Entladen des ersten Meßkondensators einen ersten Schalter, der eine erste Elektrode des ersten Meßkondensators temporär an ein erstes Bezugspotential legt.

Nach einer zweiten bevorzugten Ausgestaltung der Erfindung liegt der erste Meßkondensator mit einer zweiten Elektrode auf einem festen zweiten Bezugspotential.

Nach einer dritten bevorzugten Ausgestaltung der Erfindung sind die beiden Bezugspotentiale für den ersten Meßkondensator gleich, so daß dessen Restladung im wesentlichen gleich null ist.

Nach einer vierten bevorzugten Ausgestaltung der Erfindung ist der erste Referenzkondensator mit einer ersten Elektrode an den Ausgang des ersten Pufferverstärkers gekoppelt und ist zum Aufladen des ersten Referenzkondensators mit der Referenzladung in der Schaltungsanordnung ein zweiter Schalter vorgesehen, der den ersten Referenzkondensator über eine zweite Elektrode temporär an einen die Ladespannung liefernden Ausgang einer Versorgungs-Elektronik koppelt.

Nach einer fünften bevorzugten Ausgestaltung der Erfindung umfaßt die Schaltunganordnung zum Umladen der Referenzladung auf den ersten Meßkondensator einen den ersten Referenzkondensator mit seiner zweiten Elektrode temporär an den Eingang des ersten Pufferverstärkers koppelnden dritten Schalter.

Nach einer sechsten bevorzugten Ausgestaltung der Erfindung umfaßt die Schaltunganordnung eine Abtast/ Halteschaltung zum Abtasten und Halten der Signalspannung.

Nach einer siebenten bevorzugten Ausgestaltung der Erfindung ist in der Schaltungsanordnung ferner ein zweiter Meßkondensator vorgesehen und ist der Eingang des ersten Pufferverstärkers mit dem zweiten Meßkondensator temporär so gekoppelt, daß der Ausgang des Pufferverstärkers eine Signalspannung liefert, die im wesentlichen proportional zu einer am zweiten Meßkondensator auftretenden Meßspannung ist.

Nach einerachten bevorzugten Ausgestaltung der Erfindung umfaßt die Schaltungsanordnung ferner:

- einen eine Referenzladung tragenden zweiten Referenzkondensator und
- einen zweiten Pufferverstärker

 -- von dem ein Eingang mit dem ersten Meßkondensator zumindest temporär so gekoppelt ist, daß
 -- ein Ausgang des zweiten Pufferverstärkers eine zweite Signalspannung liefert, die im wesentlichen proportional zu der am ersten Meßkondensator auftretenden Meßspannung ist,

- wobei Eingang und Ausgang des zweiten Pufferverstärkers im Betrieb über den zweiten Referenzkondensator temporär miteinander so gekoppelt sind, daß die Referenzladung vom zweiten Referenzkondensator möglichst vollständig auf den ersten Meßkondensator übertragen wird.

Nach einer neunten bevorzugten Ausgestaltung der Erfindung umfaßt die Schaltungsanordnung ferner eine Blindstufe mit einer Kapazität, die möglichst gleich einer parasitären Kapazität ist, die die vom ersten Referenzkondensator gelieferte Referenzladung anteilig aufnimmt.

Nach einer zehnten bevorzugten Ausgestaltung der Erfindung weist eine den ersten Meßkondensator mit dem Eingang des ersten Pufferverstärkers verbindende Zuleitung der Schaltungsanordnung einen aktiv schützenden Schirm auf.

Nach einer ersten bevorzugten Ausgestaltung des Verfahrens der Erfindung wird zum Erzeugen eines auf die Änderung der Meßgröße reagierenden Meßsignals die Signalspannung abgetastet und temporär gehalten.

Nach einer zweiten bevorzugten Ausgestaltung des Verfahrens der Erfindung wird zum Erzeugen der Referenzladung eine Ladespannung an den Referenzkondensator so lange angelegt, bis über diesem eine vorgebbare Referenzspannung abfällt.

Nach einer dritten bevorzugten Ausgestaltung des Verfahrens der Erfindung ist die Restladung, auf die der Meßkondensator entladen wird, in etwa gleich null.

Die Erfindung und Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Angabe bereits vergebener Bezugszeichen in nachfolgenden Figuren verzichtet.

Fig. 1    zeigt schematisch eine Schaltungsanordnung für einen kapazitiven Sensor,

Fig. 2    zeigt schematisch zeitliche Signalverläufe der Schaltungsanordnung nach Fig. 1,

Fig. 3    zeigt schematisch eine Weiterbildung der Schaltungsanordnung von Fig. 1 und

Fig. 4    zeigt schematisch eine andere Weiterbildung der Schaltungsanordnung von Fig. 1.

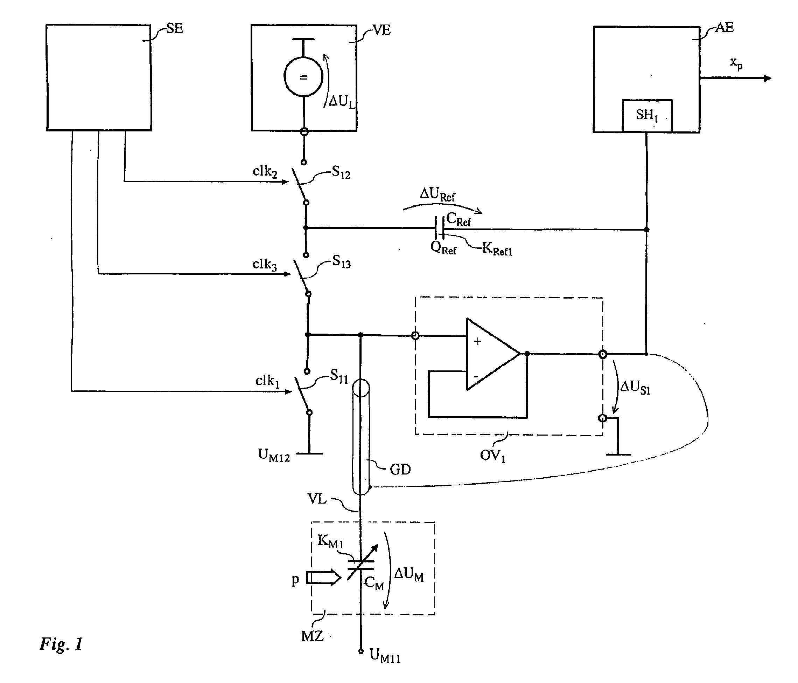

In der Fig. 1 ist eine Schaltungsanordnung für einen kapazitiven Sensor, insb. einen Absolutdrucksensor, einen Relativdrucksensor oder einen Differenzdrucksensor, schematisch dargestellt. Die Schaltungsanordnung dient dazu, an einem Ausgang eines ersten Pufferverstärkers $OV_1$ eine getaktete und zyklisch aktualisierte Signalspannung, $\Delta U_{S1}$, zu liefern, die eine Kapazität, $C_{M1}$, eines verstellbaren und/oder eines sich verstellenden ersten Meßkondensators $K_{M1}$ repräsentiert. Der Pufferverstärker $OV_1$ kann z.B. ein Impedanzwandler sein.

Die von der Schaltungsanordnung erzeugte Signalspannung, $\Delta U_{S1}$, wird bevorzugt mittels einer Auswerte-Elektronik AE des die Schaltungsanordnung verwendenden Sensors in ein entsprechendes, insb. digitales, Meßsignal $x_p$ gewandelt, das z.B. via Datenbus an eine übergeordnete Meßwarte weitervermittelt werden kann; falls erforderlich kann das Meßsignal $x_p$ auch ein analoges Signal, z.B. einen Schleifenstrom im Bereich von 4 mA bis 20 mA, sein. Die Auswertung solcher Signalspannungen ausgangs von Verstärkerschaltungen sind dem Fachmann an und für sich bekannt und bedürfen daher an dieser Stelle keiner dezidierteren Erläuterung. Entsprechende Ausführungsbeispiele für eine als Auswerte-Elektronik AE geeignete Schaltung ist z.B. auch der bereits erwähnten EP-A 922 962 zu entnehmen.

Im Betrieb der Schaltungsanordnung wird die Kapazität des Meßkondensators $K_{M1}$ mittels einer auf den Sensor einwirkenden, veränderlichen physikalischen Meßgröße p, insb. einen statischen Druck, eingestellt, d.h. eine Änderung der Meßgröße p bewirkt eine dementsprechende Änderung der momentanen Kapazität des Meßkondensators $K_{M1}$.

Für den bereits angedeuteten Fall, daß die mittels des Sensors zu detektierende physikalische Meßgröße p ein statischer Druck ist, kann der Meßkondensator $K_{M1}$ z.B. eine kapazitive Druckmeßzelle mit einer elastisch deformierbaren Membran sein, die eine von wenigstens zwei Kondensatorplatten trägt und die, auf eine Änderung der Meßgröße mit einer Änderung einer Durchbiegung reagierend, einen relativen Abstand zwischen der ersten und einer zweiten Kondensatorplatte verstellt. Aufbau und Verwendung solcher drucksensibler Meßkondensatoren sind dem Fachmann an und für sich bekannt, so daß auch hierauf nicht näher eingegangen zu werden braucht. Für beispielhafte Ausführungsformen solcher Meßkondensatoren sei auf die US-A 50 01 595, US-A 50 05 421, US-A 50 50 034, US-A 50 79 953, US-A 51 94 697, US-A 54 00 489, US-A 55 39 611 hingewiesen. Selbstverständlich kann der Meßkondensator $K_{M1}$, falls erforderlich, auch eine solcher sein, der auf Änderungen anderer physikalischer Meßgrößen, wie z.B. einer Temperatur und/oder einer Dielektrizitätskonstante, mit einer meßbaren Änderung seiner Kapazität reagiert.

Wie in Fig. 1 dargestellt, liegt der Meßkondensator $K_{M1}$ mit einer ersten Elektrode auf einem, insb. festen, ersten Bezugspotential, $U_{M11}$, z.B. Masse. Des weiteren ist der Meßkondensator $K_{M1}$ mit einer zweiten Elektrode an einen Eingang des Pufferverstärkers $OV_1$ gekoppelt. Somit wird mittels des Pufferverstärkers $OV_1$ eingangsseitig praktisch direkt eine von einer momentanen Ladung und der momentanen Kapazität, $C_{M1}$, des Meßkondensators $K_{M1}$ beeinflußte Meßspannung, $\Delta U_{M1}$, abgegriffen.

Erfindungsgemäß wird der Meßkondensator $K_{M1}$ zu Beginn eines Meßzyklusses auf eine definierte Restladung, $Q_{Res1}$, entladen. Zu diesem Zweck wird im Betrieb der Schaltungsanordnung an die zweite Elektrode des Meßkondensator $K_{M1}$ temporär ein zweites Bezugspotential, $U_{M12}$, gelegt. Ein entsprechende Restspannung, $\Delta U_{M1,0}$, des Meßkondensators $K_{M1}$ ergibt sich somit zu:

$$\Delta U_{M1,0} = \frac{Q_{Res1}}{C_{M1}} . \qquad\qquad (1)$$

Bevorzugt ist zum Entladen des Meßkondensators $K_{M1}$ in der Schaltungsanordnung ein zu diesem paralleler erster Schalter $S_{11}$ vorgesehen, der, von einem ersten binären Taktsignal $clk_1$ angesteuert, dazu dient, der zweiten Elektrode des Meßkondensators $K_{M1}$ in vorgebbarer Weise wiederholt temporär das zweite Bezugspotential, $U_{M12}$, anzulegen.

Das Bezugspotential, $U_{M12}$, ist bevorzugt mit dem Bezugspotential, $U_{M11}$, identisch, so daß der Meßkondensator $K_{M1}$ für diesen Fall beim Entladen praktisch kurzgeschlossen wird. Somit kann auf sehr einfache Weise sichergestellt werden, daß der Meßkondensator $K_{M1}$ auch bereits nach einer sehr kurzen Entladezeit nur noch die vorgegebene Restladung, $Q_{Res1}$, die hierbei praktisch gleich null ist, trägt. Falls erforderlich, können die beiden Bezugspotentiale aber auch voneinander verschieden gewählt werden.

Neben dem Meßkondensator $K_{M1}$ umfaßt die Schaltungsanordnung des weiteren wenigstens einen ersten Referenzkondensator $K_{Ref1}$ von vorgegebbarer, insb. diskret einstellbarer, Kapazität, $C_{Ref1}$, von dem eine erste Elektrode auf einem durch die Signalspannung, $\Delta U_{S1}$, momentan bestimmten Potential gehalten ist. Dazu ist der Referenzkondensator $K_{Ref1}$, wie auch in der Fig. 1 dargestellt, über seine erste Elektrode mit dem Ausgang des Pufferverstärkers $OV_1$, insb. fest, verbunden. Es ist an dieser Stelle ferner zu erwähnen, daß auch die Signalsspannung, $\Delta U_{S1}$, vorzugsweise auf das praktisch als Schaltungsnullpunkt dienende zweite Bezugspotential, $U_{M12}$, zu beziehen ist.

Im Betrieb wird eine zweite Elektrode des Referenzkondensators $K_{Ref1}$ zeitweise mit einer von einer Versorgungs-Elektronik VE gelieferten Ladespannung, $\Delta U_L$, so beaufschlagt, daß sich am Referenzkondensator $K_{Ref1}$ eine Referenzspannung, $\Delta U_{Ref1}$, einstellt, die im wesentlichen gleich einer momentanen Differenz, $\Delta U_L - \Delta U_{S1}$, zwischen Ladespannung und Signalspannung ist. Demzufolge trägt der Referenzkondensator $K_{Ref1}$ eine entsprechende Referenzladung $Q_{Ref1}$, deren Höhe sich im wesentlichen aus dem

Produkt $C_{Ref1} \cdot \Delta U_{Ref1}$ ergibt. Die Ladespannung, $\Delta U_L$, ist hierbei bevorzugt so wie die Restspannung des Meßkondensators $K_{M1}$ auf das zweite Bezugspotential, $U_{M12}$, bezogen.

Zum temporären Anlegen der Ladespannung, $\Delta U_L$, an den Referenzkondensator $K_{Ref1}$ umfaßt die Schaltungsanordnung bevorzugt einen diesen und die Versorgungs-Elektronik VE miteinander koppelnden zweiten Schalter $S_{12}$, der von einem, insb. zum Taktsignal $clk_1$ gleichphasigen, zweiten binären Taktsignal $clk_2$ gesteuert ist. Die Taktsignale $clk_1$, $clk_2$ sind hierbei so ausgebildet, daß im Betrieb der Schaltungsanordnung die beiden Schalter $S_{11}$, $S_{12}$ vor dem Beginn $t_1$ einer ersten Phase $t_1$-$t_2$ geöffnet sind.

Zum Bestimmen der Kapazität, $C_{M1}$, wird beim erfindungsgemäßen Verfahren der Meßkondensator $K_{M1}$ während der Phase $t_1$-$t_2$ über den dann zumindest zeitweise geschlossenen Schalter $S_{11}$ zunächst bis auf die vorgegebene Restspannung, $\Delta U_{M1,0}$, möglichst vollständig entladen. Praktisch gleichzeitig zum Entladen des Meßkondensators $K_{M1}$ wird der Referenzkondensator $K_{Ref1}$ mittels der über den dann geschlossenen Schalter $S_{12}$ zugeführten Ladespannung, $\Delta U_L$, aufgeladen. Falls erforderlich können das Entladen des Meßkondensators $K_{M1}$ und das Aufladen des Referenzkondensators $K_{Ref1}$ in der

Phase $t_1$-$t_2$ aber auch zeitlich versetzt erfolgen. Zu einem Phasenende $t_2$ der Phase $t_1$-$t_2$ ist dann sowohl der Schalter $S_{11}$ als auch der Schalter $S_{12}$ wieder geöffnet.

Die Dauer der Phase $t_1$-$t_2$ ist hierbei so bemessen, das spätestens zum Phasenende $t_2$ der Meßkondensator $K_{M1}$ auf die definierte Restladung, z.B. $Q_{Res1} = 0$, entladen ist. Ferner soll außerdem spätestens zum Phasenende $t_2$ der Referenzkondensator $K_{Ref1}$, wie bereits erwähnt, die Referenzladung,

$$Q_{Ref1} = C_{Ref1} \cdot (\Delta U_L - \Delta U_{S1}) \qquad (2)$$

tragen.

Nach dem Ablauf der Phase $t_1$-$t_2$ wird während einer zweiten Phase $t_3$-$t_4$ des erfindungsgemäßen Verfahrens die Referenzladung, $Q_{Ref1}$, möglichst vollständig von dem Referenzkondensator $K_{Ref1}$ entfernt und möglichst vollständig auf den Meßkondensator $K_{M1}$ so umgeladen, daß zu einem Phasenende $t_4$ der Phase $t_3$-$t_4$ praktisch gilt:

$$C_{M1} \cdot (\Delta U_{M1} + \Delta U_{M1,0}) = Q_{Ref1} + Q_{Res1} \qquad (3).$$

Unter Berücksichtigung von Gl. (1) und (2) kann aus Gl. (3) die Meßspannung $\Delta U_{M1}$ nunmehr wie folgt ermittelt werden:

$$\Delta U_{M1} = \frac{C_{Ref1}}{C_{M1}} \cdot \Delta U_{Ref1} \cdot \qquad (4)$$

Wie aus der Gl. (4) ersichtlich, ist die Meßspannung, $\Delta U_{M1}$, bei der erfindungsgemäßen Schaltungsanordnung praktisch proportional zum Kehrwert der Kapazität, $C_{M1}$, des Meßkondensators $K_{M1}$. Dies wiederum hat den Vorteil, daß bei einer Verwendung der erfindungsgemäßen Schaltungsanordnung in einem kapazitiven Drucksensor, bei dem die Kapazität, $C_{M1}$, bekanntlich von einem Kehrwert des zu messenden Drucks abhängig ist, eine Erhöhung des Drucks, abgesehen von entsprechenden Verstärkungsfaktoren, proportional auch eine Erhöhung der Meßspannung, $\Delta U_{M1}$, bewirkt.

Zum Umladen der Referenzladung, $Q_{Ref1}$, auf den Meßkondensator $K_{M1}$ umfaßt die Schaltungsanordnung, wie in der Fig. 1 dargestellt, bevorzugt einen dritten Schalter $S_{13}$, der, angesteuert von einem zu den Taktsignalen $clk_1$, $clk_2$ phasenverschobenen dritten Taktsignal $clk_3$, die zweite Elektrode des Referenzkondensators $K_{Ref1}$ mit dem Eingang des Pufferverstärkers $OV_1$ verbindet.

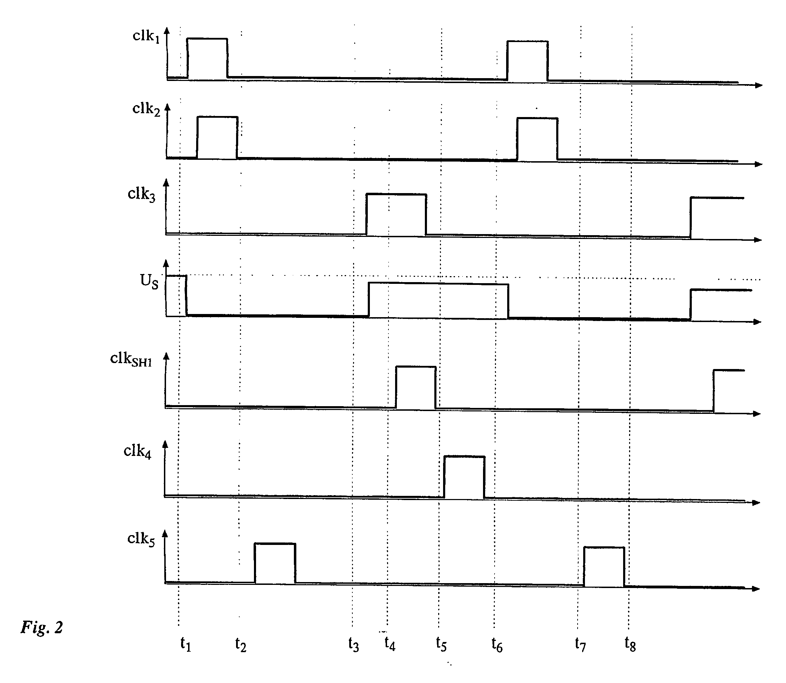

Gemäß der Fig. 2 wird der zuvor, insb. während der Phase $t_1$-$t_2$, geöffnet gehaltene Schalter $S_{13}$ im Verlauf

der Phase $t_3$-$t_4$ geschlossen. Ein unmittelbar nach dem Schließen des Schalters $S_{13}$ zwischen dem Eingang und dem Ausgang des Pufferverstärkers $OV_1$ bestehender momentaner Signalpegelunterschied wird dadurch praktisch sofort ausgeglichen. Anders gesagt, die über dem Referenzkondensator $K_{Ref1}$ liegende Referenzspannung, $\Delta U_{Ref1}$, wird nachdem der Schalter $S_{13}$ geschlossen ist auf Null gesetzt, wodurch zwangsläufig der Referenzkondensator $K_{Ref1}$ auch entladen ist. Ein dabei fließender Entladestrom transportiert die zuvor vom Referenzkondensator $K_{Ref1}$ getragene Referenzladung praktisch vollständig zum Meßkondensator $K_{M1}$.

Sowohl vorgenannter Schalter $S_{13}$ als auch die Schalter $S_{11}$, $S_{12}$ können in der dem Fachmann bekannten Weise mittels Transistoren, insb. FeldeffektTransistoren, realisert sein. Es sei an dieser Stelle ferner darauf hingewiesen, daß die Schalter $S_{11}$, $S_{12}$, $S_{13}$ zwar als Schließer symbolisiert sind, also als Schalter, die dann geschlossen sind, wenn das zugehörige Taktsignal $clk_1$, $clk_2$ bzw. $clk_3$ einen High-Pegel annimmt. Falls erforderlich können die Schalter $S_{11}$, $S_{12}$, $S_{13}$ aber auch als Öffner ausgeführt sein, die jeweils dann geschlossen sind, wenn das zugehörige Taktsignal $clk_1$, $clk_2$ bzw. $clk_3$ einen Low-Pegel aufweist. Selbstverständlich sind für diesen Fall auch die Taktsignale in der entsprechenden Weise zu invertieren.

Wie aus der Fig. 2 ersichtlich, sind die Taktsignale $clk_1$, $clk_2$, $clk_3$ jedenfalls so zu formen, daß der Schalter $S_{13}$ höchstens immer nur dann geschlossen ist, wenn die beiden Schalter $S_{11}$, $S_{12}$ geöffnet sind. Falls erforderlich, können die Taktsignale dabei, wie ebenfalls in Fig. 2 dargestellt, voneinander verschiedene Puls-zu-Pausen-Verhältnisse aufweisen. Zur Unterdrückung von Störeinkopplungen auf die Signalspannung können, wie z.B. auch in der EP-A 922 962 beschrieben, die Taktsignale ferner im Betrieb unter Beibehaltung oben beschriebener Randbedingungen hinsichtlich ihrer Taktfrequenz oder ihrer Phasenlage variiert werden.

Zum Erzeugen der Taktsignale $clk_1$, $clk_2$, $clk_3$ kann z.B. eine entsprechende Steuer-Elektronik VE des die Schaltungsanordnung verwendenden Sensors dienen.

Nach einer bevorzugten Weiterbildung des Verfahrens der Erfindung wird zum Erzeugen des Meßsignals $x_p$ die Signalspannung, $\Delta U_{s1}$, während einer auf die Phase $t_3$-$t_4$ folgenden dritten Phase $t_4$-$t_5$ mittels einer ersten, von einem Abtast-Taktsignal $clk_{SH1}$ gesteuerten Abtast-/ Halteschaltung $SH_1$ abgetastet und gehalten. Das Abtast-Taktsignal $clk_{SH1}$ ist, wie auch in der Fig. 2 schematisch dargestellt, so geformt, daß die Abtast-/ Halteschaltung $SH_1$ erst nach dem Schließen des Schalters $S_{13}$ und nach dem aktualisieren der Signalspannung, $\Delta U_{s1}$, aktiviert, also an den diese führenden Ausgang des Pufferverstärkers $OV_1$ gekoppelt ist. Des weiteren ist eine Pulsbreite des Abtast-Taktsignals $clk_{SH1}$ so bemessen, daß die Abtast-/ Halteschaltung $SH_1$ spätestens zum Ende $t_5$ der Phase $t_4$-$t_5$ wieder vom Pufferverstärker $OV_1$ getrennt ist.

Der Abtast-/ Halteschaltung $SH_1$ kann in der dem Fachmann bekannten Weise ein zur Erzeugung eines die Signalspannung, $\Delta U_{S1}$, repräsentierenden, Digitalsignals dienender Analog-zu-Digitalwandler nachgeschaltet sein. Zur Korrektur einer allfälligen Drift der Ladespannung, $\Delta U_L$, ist der, hier nicht dargestellte, Analog-zu-Digitalwandler vorteilhafter Weise mit einem Referenzeingang z.B. an eine zur Ladespannung, $\Delta U_L$, direkt proportionale Referenzspannung zu koppeln.

Untersuchungen haben ferner gezeigt, daß bei konkreten Realisierungen der erfindungsgemäßen Schaltungsanordnung der Fall auftreten kann, daß praktisch nicht vermeidbare parasitäre Kapazitäten der Schaltungsanordnung so ausgebildet und so geschaltet sein können, daß ein signifikanter Anteil der Referenzladung, $Q_{Ref1}$, von etwa 1% bis 10% nicht auf den Meßkondensator $K_{M1}$ übertragen werden. Dies wiederum hätte eine erhebliche Verfälschung der Signalspannung, $\Delta U_{S1}$, zur Folge. Hinzu kommt, daß solche parasitären Kapazitäten, die z.B. durch üblicherweise verwendete Überspannungsschutzschaltungen, durch Leitungskapazitäten oder durch Eingangskapazitäten des Pufferverstärkers $OV_1$ gebildet sein können, zumeist veränderlich sind, so daß deren Einfluß auf die Signalspannung, $\Delta U_{S1}$, praktisch auch nicht genau vorherbestimmt werden können.

Zur Verbesserung der Genauigkeit der Signalspannung, $\Delta U_{S1}$, ist daher nach einer bevorzugten Weiterbildung der Erfindung eine Blindstufe $BS_1$ mit einer Kapazität, $C_{BS1}$, vorgesehen, die zum einen möglichst gleich einer die Referenzladung, $Q_{Ref1}$, anteilig aufnehmenden parasitären Kapazität, $C_{PS1}$, ist und die sich zum anderen auch in einer zumindest ähnlichen Weise im Betrieb verändert. Um eine möglichst genaue Nachbildung dieser parasitären Kapazität, $C_{PS1}$, zu erzielen, ist die Blindstufe $BS_1$ im wesentlichen identisch zu jenen die parasitäre Kapazität, $C_{PS1}$, bildenden Schaltungsstrukturen $PS_1$ designt.

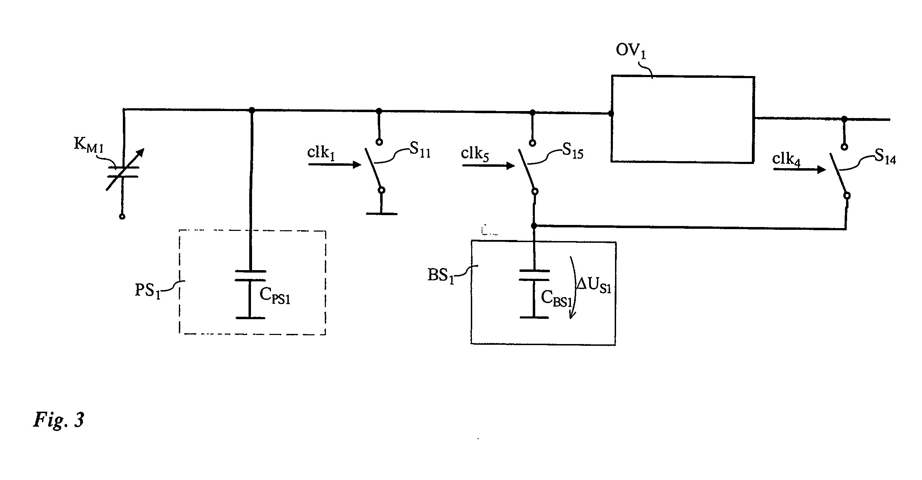

Zur Kompensation der auf die Schaltungsstrukturen $PS_1$ übertragenen Anteile der Referenzladung, $Q_{Ref1}$, wird die Kapazität, $C_{BS1}$, der Blindstufe $BS_1$ nach einer bevorzugten Weiterbildung des Verfahrens der Erfindung in einer vierten Phase $t_5$-$t_6$ mittels der Signalspannung, $\Delta U_{S1}$, aufgeladen. Dazu ist in der Schaltungsanordnung bei dieser Weiterbildung der Erfindung ein vierter Schalter $S_{14}$ vorgesehen, der, wie in Fig. 3 gezeigt, von einem vierten Taktsignal $clk_4$ gesteuert ist und der eine erste Elektrode der Blindstufe $BS_1$ mit dem die Signalspannung, $\Delta U_{S1}$, führenden Ausgang des Pufferverstärkers $OV_1$ verbindet.

Eine so in der Blindstufe $BS_1$ erzeugte Ladung wird mittels eines von einem fünften Taktsignal $clk_5$ gesteuerten fünften Schalters $S_{15}$ schließlich während einer fünften Phase $t_7$-$t_8$ zumindest teilweise auf den in der oben beschriebenen Weise entladenen Meßkondensator $K_{M1}$ und die in gleicher Weise entladene Schaltungsstrukturen $PS_1$ verteilt. Die Phase $t_7$-$t_8$, tritt, wie auch aus der Fig. 2 ohne weiteres ersichtlich, praktisch zwischen den beiden

Phasen $t_1$-$t_2$, $t_3$-$t_4$ eines Meßzyklus auf, der sich an das Aufladen der Blindstufe $BS_1$ in Phase $t_7$-$t_8$ anschließt.

Bei dieser Weiterbildung des Verfahrens der Erfindung kann unter der obigen Voraussetzung, daß die parasitäre Kapazität, $C_{PS1}$, in einer Größenordnung von etwa 1 % bis 10% der Meßkapazität, $C_{M1}$, liegt und unter der Annahme, daß sich sowohl die parasitäre Kapazität, $C_{PS1}$, als auch die Meßkapazität, $C_{M1}$, über einen im Vergleich zur Dauer eines Meßzyklus großen Zeitraum nahezu nicht ändern wird, für die Meßspannung, $\Delta U_{M1}$, folgende Nährung gelten:

$$\Delta U_{M1} = \frac{C_{Ref1}}{C_{M1} + C_{PS1} - C_{BS1}} \cdot \Delta U_{Ref1} . \tag{5}$$

Wie anhand der Gl. (5) leicht nachvollziehbar, entspricht diese Näherung, für den Fall, daß $C_{PS1}$ gleich $C_{BS1}$ ist, Gl. (4). Die dabei getroffene Annahme, daß sich die Kapazitäten, $C_{PS1}$, $C_{M1}$, während zweier aufeinanderfolgenden Meßzyklen vergleichsweise langsam ändern, kann in einfacher Weise durch eine entsprechend hohe Wiederholrate der Meßzyklen, also eine entsprechend hochgewählte Frequenz bei den Taktsignalen leicht erfüllt werden. Es sei an dieser Stelle noch erwähnt, daß diese Nährung umso genauer gilt, je kleiner die parasitäre Kapazität, $C_{PS1}$, im Vergleich zur Meßkapazität, $C_{M1}$, ausgebildet ist.

Es hat sich ferner gezeigt, daß neben den erwähnten parasitären Kapazitäten auch Störspannungen, die entlang des zwischen dem Meßkondensator $K_{M1}$ und dem Pufferverstärker $OV_1$ verlaufenden Signalübertragungpfad auftreten, eine weitere Ursache für allfällige Störungen der Signalspannung, $\Delta U_{S1}$, sein können.

Zur Unterdrücken solcher Störeinflüssen auf die Signalspannung, $\Delta U_{S1}$, ist nach einer bevorzugten Weiterbildung der Erfindung eine die erste Elektrode des Meßkondensators $K_{M1}$ und den Eingang des Pufferverstärker $OV_1$ entsprechend verbindende Zuleitung VL vorgesehen, die zumindest abschnitsweise geschirmt ist. Um ein Verfälschung der Signalspannung, $\Delta U_{S1}$, aufgrund von durch diese Zuleitung VL zusätzlich in den Signalübertragungpfad eingebrachten, üblicherweise nicht konstanten Leitungskapazitäten zu vermeiden, ist bei dieser Weiterbildung ferner eine galvanische Verbindung zwischen einem, insb. koaxialen, Schirm GD der Zuleitung VL und dem Ausgang des Pufferverstärkers $OV_1$ vorgesehen. Diese auch als Aktivschutz (active guarding) oder "mitlaufender Schirm" bekannte Maßnahme dient dazu, eine zwischen der ersten Elektrode des Meßkondensators $K_{M1}$ und dem Schirm GD gebildete Leitungskapazität möglichst entladen oder zumindest auf einer weitgehend konstanten Ladung zu halten.

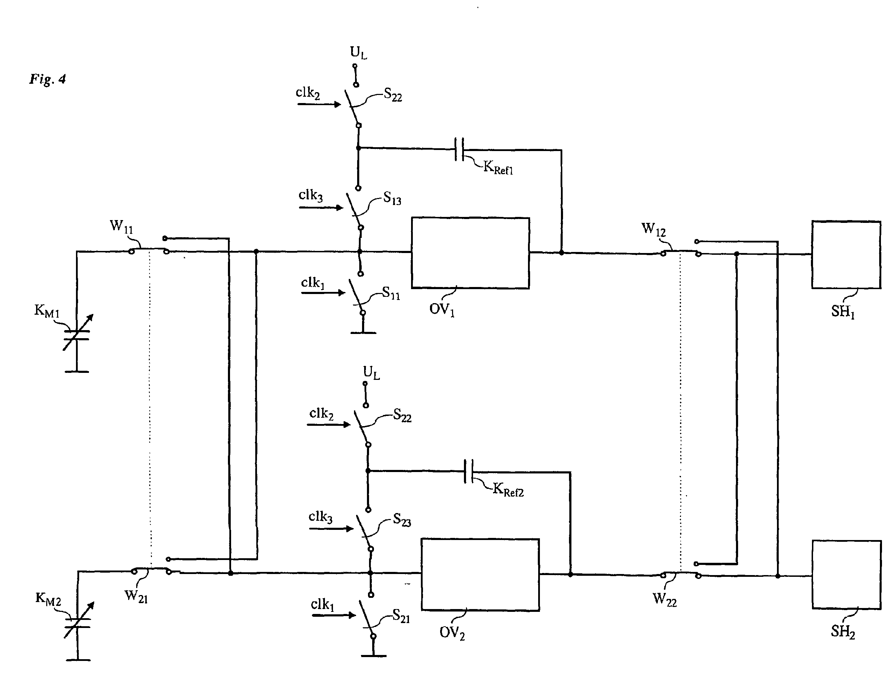

Für den Fall, daß, wie z.B. bei der Messung von Druckdifferenzen üblich, parallel zur Messung der Kapazität, $C_{M1}$, des Meßkondensators $K_{M1}$ auch eine Kapazität, $C_{M2}$, eines zweiten Meßkondensators $K_{M2}$ ermittel werden soll, kann z.B. ein zur vorbeschriebenen ersten Meßwerterfassungs-Stufe, bestehend aus wenigstens dem Meßkondensator $K_{M1}$, dem Referenzkondensator $K_{Ref1}$, dem Pufferverstärker $OV_1$ und den Schaltern $S_{11}$, $S_{12}$, $S_{13}$, praktisch identische, also mittels wenigstens eines zweiten Meßkondensators $K_{M2}$, eines zweiten Referenzkondensators $K_{Ref2}$, eines zweiten Pufferverstärkers $OV_2$ und eines sechsten, siebten und achten Schalters $S_{21}$, $S_{22}$, $S_{23}$ gebildete zweite Meßwerterfassungs-Stufe verwendet werden, wobei ausgangs des Pufferverstärkers $OV_2$ in entsprechender Weise eine zweite Signalspannung, $\Delta U_{S2}$, abgreifbar ist, die eine über dem Meßkondensator $K_{M2}$ abfallende Meßspannung, $\Delta U_{M2}$, repräsentiert. Zur Ansteuerung der Schalter $S_{21}$, $S_{22}$, $S_{23}$ können hierbei z.B. die entsprechenden Taktsignale $clk_1$, $clk_2$, $clk_3$ dienen, vgl. Fig. 4.

Bevorzugt umfaßt die Auswerte-Elektronik AE bei dieser Weiterbildung der Erfindung auch eine zweite Abtast-/Halteschaltung $SH_2$ für die von der zweiten Meßwerterfassungs-Stufe gelieferte Signalspannung, $\Delta U_{S2}$.

Es hat sich bei dieser Weiterbildung der Erfindung ferner gezeigt, daß, insb. für den Fall, daß die beiden Meßwerterfassungs-Stufen, z.B. bedingt durch geringfügige Toleranzen der einzelnen Komponenten, voneinander verschiedene Übertragungsverhalten aufweisen, ein zyklisches Vertauschen einzelner gleichwirkender Komponenten der Meßwerterfassungs-Stufe, also z.B. beider Pufferverstärker $OV_1$, $OV_2$ und/oder beider Referenzkondensatoren $K_{Ref1}$, $K_{Ref2}$ und/oder ggf. beider Abtast-/Halteschaltungen $SH_1$, $SH_2$, im zeitlichen Mittel die genausten Meßergebnisse liefert. Das Vertauschen einzelner Komponenten kann z.B. mittels eines einfachen Schaltwerkes erfolgen, bestehend aus einem ersten, zweiten dritten und vierten Umschalter $W_{11}$, $W_{12}$, $W_{21}$ und $W_{22}$, welche Umschalter nach einigen, z.B. etwa 10 bis 100, Wiederholungen vorbeschriebener, wenigstens die Phasen $t_1$-$t_2$, $t_3$-$t_4$ umfassenden Meßzyklen aus den gezeigten Schalterstellungen möglichst synchron in die jeweils alternative überführt werden und umgekehrt.

Die erste Meßwerterfassungs-Stufe der vorgeschlagenen Schaltungsanordnung und, falls vorhanden, auch die zweite Meßwerterfassungs-Stufe und/oder die Blindstufe $BS_1$ sind bevorzugt in monolithischer Bauweise, z.B. in einen einzigen ASIC-Baustein integriert, realisiert. Dies hat neben einem sehr kleinen Platzbedarf der Schaltungsanordnung z.B. auch den Vorteil, daß sowohl die zweite Meßwerterfassungs-Stufe sehr einfache als zur ersten Meßwerterfassungs-Stufe identisches Duplikat hergestellt werden kann. Ebenso läßt sich auf diese Weise auch die Blindstufe $BS_1$ sehr leicht an die die parasitäre Kapazität, $C_{PS1}$, bildenden Schaltungsstrukturen $P_{S1}$ anpassen.

**Patentansprüche**

1. Schaltungsanordnung für einen kapazitiven Sensor, die umfaßt:

   - einen bis auf eine vorgebbare Restladung entladenen ersten Meßkondensator ($K_{M1}$) von veränderlicher Kapazität, die mittels einer zu detektierenden physikalischen Meßgröße (p) eingestellt ist,
   - einen eine Referenzladung tragenden ersten Referenzkondensator ($K_{Ref1}$) und
   - einen ersten Pufferverstärker ($OV_1$)
   - von dem ein Eingang mit dem ersten Meßkondensator ($K_{M1}$) zumindest temporär so gekoppelt ist, daß

     -- ein Ausgang des ersten Pufferverstärkers ($OV_1$) eine erste Signalspannung liefert, die im wesentlichen proportional zu einer am ersten Meßkondensator ($K_{M1}$) auftretenden Meßspannung ist,

   - wobei Eingang und Ausgang des ersten Pufferverstärkers ($OV_1$) im Betrieb über den ersten Referenzkondensator ($K_{Ref1}$) temporär miteinander so gekoppelt sind, daß die Referenzladung vom ersten Referenzkondensator ($K_{Ref1}$) möglichst vollständig auf den ersten Meßkondensator ($K_{M1}$) übertragen wird.

2. Schaltungsanordnung nach Anspruch 1, die zum Entladen des ersten Meßkondensators ($K_{M1}$) einen ersten Schalter ($S_{11}$) umfaßt, der eine erste Elektrode des ersten Meßkondensators ($K_{M1}$) temporär an ein erstes Bezugspotential legt.

3. Schaltungsanordnung nach Anspruch 2, bei der der erste Meßkondensator ($K_{M1}$) mit einer zweiten Elektrode auf einem festen zweiten Bezugspotential liegt.

4. Schaltungsanordnung nach Anspruch 3, bei der die beiden Bezugspotentiale für den ersten Meßkondensator ($K_{M1}$) gleich sind, so daß dessen Restladung im wesentlichen gleich null ist.

5. Schaltungsanordnung nach einem der Ansprüche 1 bis 4,

   - bei der der erste Referenzkondensator ($K_{Ref1}$) mit einer ersten Elektrode an den Ausgang des ersten Pufferverstärkers ($OV_1$) gekoppelt ist und
   - bei der zum Aufladen des ersten Referenzkondensators ($K_{Ref1}$) mit der Referenzladung einen zweiten Schalter ($S_{12}$) vorgesehen ist, der den ersten Referenzkondensator ($K_{Ref1}$) über eine zweite Elektrode temporär an einen die Ladespannung liefernden Ausgang einer Versorgungs-Elektronik (VE) koppelt.

6. Schaltungsanordnung nach einem der Ansprüche 1 bis 5, die zum Umladen der Referenzladung auf den ersten Meßkondensator ($K_{M1}$) einen den ersten Referenzkondensator ($K_{Ref1}$) mit seiner zweiten Elektrode temporär an den Eingang des ersten Pufferverstärkers ($OV_1$) koppelnden dritten Schalter ($S_{13}$) umfaßt.

7. Schaltungsanordnung nach einem der Ansprüche 1 bis 6, die eine Abtast/ Halteschaltung ($SH_1$) zum Abtasten und Halten der Signalspannung umfaßt.

8. Schaltungsanordnung nach einem der Ansprüche 1 bis 7,

   - bei der ferner ein zweiter Meßkondensator ($K_{M2}$) vorgesehen ist und
   - bei der der Eingang des ersten Pufferverstärkers ($OV_1$) mit dem zweiten Meßkondensator ($K_{M1}$) temporär so gekoppelt ist, daß der Ausgang des Pufferverstärkers ($OV_1$) eine Signalspannung liefert, die im wesentlichen proportional zu einer am zweiten Meßkondensator ($K_{M1}$) auftretenden Meßspannung ist.

9. Schaltungsanordnung nach Anspruch 8, die ferner umfaßt:

   - einen eine Referenzladung tragenden zweiten Referenzkondensator ($K_{Ref2}$) und
   - einen zweiten Pufferverstärker ($OV_2$)

     -- von dem ein Eingang mit dem ersten Meßkondensator ($K_{M1}$) zumindest temporär so gekoppelt ist, daß
     -- ein Ausgang des zweiten Pufferverstärkers ($OV_2$) eine zweite Signalspannung liefert, die im wesentlichen proportional zu der am ersten Meßkondensator ($K_{M1}$) auftretenden Meßspannung ist,

- wobei Eingang und Ausgang des zweiten Pufferverstärkers (OV$_2$) im Betrieb über den zweiten Referenzkondensator (K$_{Ref2}$) temporär miteinander so gekoppelt sind, daß die Referenzladung vom zweiten Referenzkondensator (K$_{Ref2}$) möglichst vollständig auf den ersten Meßkondensator (K$_{M1}$) übertragen wird.

**10.** Schaltungsanordnung nach einem der Ansprüche 1 bis 9, die ferner eine Blindstufe BS$_1$ mit einer Kapazität umfaßt, die möglichst gleich einer parasitären Kapazität ist, die die vom ersten Referenzkondensator (K$_{Ref1}$) gelieferte Referenzladung anteilig aufnimmt.

**11.** Schaltungsanordnung nach einem der Ansprüche 1 bis 9, bei der eine den ersten Meßkondensator (K$_{M1}$) mit dem Eingang des ersten Pufferverstärkers (OV$_1$) verbindende Zuleitung (VL) einen aktiv schützenden Schirm (GD) aufweist.

**12.** Sensor mit einer Schaltungsanordnung nach einem der Ansprüche 1 bis 11.

**13.** Verfahren zum Einstellen einer Signalspannung, die eine veränderliche physikalische Meßgröße (p), insb. einen statischen Druck eines Fluids, momentan repräsentiert, welches Verfahren folgende Schritte umfaßt:

- Bewirken einer mit einer Änderung der Meßgröße (p) korrespondierenden Änderung einer Kapazität eines verstellbaren Meßkondensators (K$_{M1}$),
- Entladen des Meßkondensators (K$_{M1}$) auf eine vorgebbare Restladung,
- Erzeugen einer Referenzladung auf einem Referenzkondensator (K$_{Ref1}$),
- Umladen der Referenzladung vom Referenzkondensator (K$_{Ref1}$) auf den Meßkondensator (K$_{M1}$) zum Erzeugen einer dessen Kapazität momentan repräsentierenden Meßspannung sowie
- Verstärken der Meßspannung mit einer Verstärkung von etwa eins zum Erzeugen der Signalspannung.

**14.** Verfahren nach Anspruch 13, bei dem zum Erzeugen eines auf die Änderung der Meßgröße (p) reagierenden Meßsignals (x$_p$) die Signalspannung abgetastet und temporär gehalten wird.

**15.** Verfahren nach Anspruch 13, bei dem zum Erzeugen der Referenzladung eine Ladespannung an den Referenzkondensator (K$_{Ref1}$) so lange angelegt wird, bis über diesem eine vorgebbare Referenzspannung abfällt.

**16.** Verfahren nach Anspruch 13, bei dem die Restladung, auf die der Meßkondensator (K$_{Ref1}$) entladen wird, in etwa gleich null ist.

**Claims**

**1.** Circuit arrangement for a capacitance sensor comprising:

- a first precision capacitor (K$_{M1}$), discharged to a predefinable residual charge, of changeable capacitance which is configured using a physical measured variable (p) to be detected
- a first reference capacitor (K$_{ref1}$) carrying a reference charge
- a first buffer amplifier (OV$_1$)

-- of which an input is at least temporarily coupled with the first precision capacitor (KM1) in such a way that
-- an output of the first buffer amplifier (OV$_1$) delivers a first signal voltage which is essentially proportional to a measurement voltage occurring at the first precision capacitor (KM1)

- **characterized in that** the input and output of the first buffer amplifier (OV$_1$) are temporarily coupled with one another via the first reference capacitor (K$_{ref1}$) during operation in such a way that the reference charge of the first reference capacitor (K$_{ref1}$) is transferred as completely as possible to the first precision capacitor (K$_{M1}$).

**2.** Circuit arrangement as per Claim 1 which, for the purpose of discharging the first precision capacitor (K$_{M1}$), comprises a first switch (S$_{11}$) which temporarily applies a first electrode of the first precision capacitor (K$_{M1}$) to a first reference potential.

**3.** Circuit arrangement as per Claim 2 in which the first precision capacitor (K$_{M1}$) is applied to a fixed second reference potential with a second electrode.

4. Circuit arrangement as per Claim 3 in which the two reference potentials are the same for the first precision capacitor ($K_{M1}$) such that its residual charge is essentially zero.

5. Circuit arrangement as per one of the Claims 1 to 4

   - in which the first reference capacitor ($K_{ref1}$) is coupled to the output of the first buffer amplifier ($OV_1$) with a first electrode and
   - in which a second switch ($S_{12}$) is provided to charge the first reference capacitor ($K_{ref1}$) with the reference charge, said switch temporarily coupling the first reference capacitor ($K_{ref1}$) to an output of a power supply electronics unit (VE) via a second electrode, and said output providing the charge voltage.

6. Circuit arrangement as per one of the Claims 1 to 5 which, for the purpose of switching the reference charge to the first precision capacitor ($K_{M1}$), comprises a third switch ($S_{13}$) that temporarily couples the first reference capacitor ($K_{ref1}$) to the input of the first buffer amplifier ($OV_1$) with the second electrode.

7. Circuit arrangement as per one of the Claims 1 to 6 which comprises a scanning/hold circuit ($SH_1$) to scan or hold the signal voltage.

8. Circuit arrangement as per one of the Claims 1 to 7

   - further comprising a second precision capacitor ($K_{M2}$) and
   - in which the input of the first buffer amplifier ($OV_1$) is temporarily coupled to the second precision capacitor ($K_{M2}$) in such a way that the output of the buffer amplifier ($OV_1$) delivers a signal voltage which is essentially proportional to a measuring voltage occurring at the second precision capacitor ($K_{M2}$).

9. Circuit arrangement as per Claim 8, further comprising:

   - a second reference capacitor ($K_{ref2}$) carrying a reference charge and
   - a second buffer amplifier ($OV_2$)

      -- of which one input is at least temporarily coupled to the first precision capacitor ($K_{M1}$) in such a way that
      -- one output of the second buffer amplifier ($OV_2$) delivers a second signal voltage which is essentially proportional to the measurement voltage occurring at the first precision capacitor ($K_{M1}$)

   - whereby the input and output of the second buffer amplifier ($OV_2$) are temporarily coupled together during operation via the second reference capacitor ($K_{ref2}$) in such a way that the reference charge is transferred as completely as possible from the second reference capacitor ($K_{ref2}$) to the first precision capacitor ($K_{M1}$).

10. Circuit arrangement as per one of the Claims 1 to 9 further comprising a blind stage ($BS_1$) with a capacitance which is as equal as possible to a parasitic capacitance which proportionately accepts the reference charge delivered from the first reference capacitor ($K_{ref1}$).

11. Circuit arrangement as per one of the Claims 1 to 9 whereby a supply line (VL) connecting the first precision capacitor ($K_{M1}$) to the input of the first buffer amplifier ($OV_1$) exhibits an actively protective shield (GD).

12. Sensor with a circuit arrangement as per one of the Claims 1 to 11.

13. Method for setting a signal voltage instantaneously representing a changeable physical measured variable (p), particularly a static pressure of a fluid, said method comprising the following steps:

   - Effectuating a change in the capacitance of an adjustable precision capacitor ($K_{M1}$) that corresponds to a change in the measured variable (p)
   - Discharging the precision capacitor ($K_{M1}$) to a predefinable residual charge
   - Generating a reference charge on a reference capacitor ($K_{ref1}$)
   - Switching the reference charge from the reference capacitor ($K_{ref1}$) to the precision capacitor ($K_{M1}$) to generate a measurement voltage representing the current capacitance
   - Amplifying the measurement voltage with an amplification of approx. 1 to generate the signal voltage.

**14.** Method as per Claim 13 in which the signal voltage is scanned and temporarily held to generate a measuring signal ($x_p$) that reacts to the change in the measured variable ($p$).

**15.** Method as per Claim 13 in which, for the purpose of generating a reference charge, a charge voltage is applied to the reference capacitor ($K_{ref1}$) until a predefinable reference voltage drops over this capacitor.

**16.** Method as per Claim 13 in which the residual charge to which the precision capacitor ($K_{ref1}$) is discharged is more or less zero.

**Revendications**

**1.** Circuit de commutation destiné à un capteur capacitif, comprenant :

- un premier condensateur de mesure ($K_{M1}$) déchargé jusqu'à une charge résiduelle prédéfinissable, de capacité variable, laquelle est réglée au moyen d'une grandeur de mesure ($p$) physique à détecter,
- un premier condensateur de référence ($K_{Ref1}$) portant une charge de référence et
- un premier amplificateur tampon ($OV_1$)

-- duquel une entrée est couplée au moins temporairement avec le premier condensateur de mesure ($K_{M1}$), de telle manière
-- qu'une sortie du premier amplificateur tampon ($OV_1$) fournit une première tension de signalisation, qui est pour l'essentiel proportionnelle à une tension de mesure apparaissant au niveau du premier condensateur de mesure ($K_{M1}$),

- l'entrée et la sortie du premier amplificateur tampon ($OV_1$) étant couplées temporairement entre elles, en fonctionnement, par l'intermédiaire du premier condensateur de référence ($K_{Ref1}$), de telle manière que la charge de référence du premier condensateur de référence ($K_{Ref1}$) est transmise le plus complètement possible au premier condensateur de mesure ($K_{M1}$).

**2.** Circuit de commutation selon la revendication 1, qui comprend pour la décharge du premier condensateur de mesure ($K_{M1}$) un premier interrupteur ($S_{11}$), qui applique une première électrode du premier condensateur de mesure ($K_{M1}$) temporairement à un premier potentiel de référence.

**3.** Circuit de commutation selon la revendication 2, pour lequel le premier condensateur de mesure ($K_{M1}$) est soumis avec une deuxième électrode à un deuxième potentiel de référence fixe.

**4.** Circuit de commutation selon la revendication 3, pour lequel les deux potentiels de référence pour le premier condensateur de mesure ($K_{M1}$) sont égaux, si bien que sa charge résiduelle est pour l'essentiel égale à zéro.

**5.** Circuit de commutation selon l'une des revendications 1 à 4,

- pour lequel le premier condensateur de référence ($K_{Ref1}$) est couplé avec une première électrode à la sortie du premier amplificateur tampon ($OV_1$) et
- pour lequel est prévu un deuxième interrupteur ($S_{12}$) pour la charge du premier condensateur de référence ($K_{Ref1}$) avec la charge de référence, interrupteur qui couple temporairement le premier condensateur de référence ($K_{Ref1}$) via une deuxième électrode à une sortie, fournissant la tension de charge, d'un circuit électronique d'alimentation (VE).

**6.** Circuit de commutation selon l'une des revendications 1 à 5, qui comprend, pour le transfert de la charge de référence sur le premier condensateur de mesure ($K_{M1}$) un troisième interrupteur ($S_{13}$) couplant temporairement le premier condensateur de référence ($K_{Ref1}$) avec sa deuxième électrode à l'entrée du premier amplificateur tampon ($OV_1$).

**7.** Circuit de commutation selon l'une des revendications 1 à 6, qui comprend un échantillonneur bloqueur ($SH_1$) destiné à l'échantillonnage et au blocage de la tension de signalisation.

**8.** Circuit de commutation selon l'une des revendications 1 à 7,

- pour lequel est prévu en outre un deuxième condensateur de mesure ($K_{M2}$) et
- pour lequel l'entrée du premier amplificateur tampon ($OV_1$) est couplée temporairement avec le deuxième condensateur de mesure ($K_{M2}$) de telle sorte que la sortie du premier amplificateur tampon ($OV_1$) fournit une tension de signalisation, qui est pour l'essentiel proportionnelle à un tension de mesure apparaissant au niveau du deuxième condensateur de mesure ($K_{M2}$).

9. Circuit de commutation selon la revendication 8, qui comprend en outre :

- un deuxième condensateur de référence ($K_{Ref2}$) portant une charge de référence et
- un deuxième amplificateur tampon ($OV_2$)

-- duquel une entrée est couplée au moins temporairement avec le premier condensateur de mesure ($K_{M1}$), de telle manière que
-- une sortie du deuxième amplificateur tampon ($OV_2$) fournit une deuxième tension de signalisation, qui est pour l'essentiel proportionnelle à la tension de mesure apparaissant au niveau du premier condensateur de mesure ($K_{M1}$),

- l'entrée et la sortie du deuxième amplificateur tampon ($OV_2$) étant couplées temporairement entre elles, en fonctionnement, par l'intermédiaire du deuxième condensateur de référence ($K_{Ref2}$), de telle manière que la charge de référence du deuxième condensateur de référence ($K_{Ref2}$) est transmise le plus complètement possible au premier condensateur de mesure ($K_{M1}$).

10. Circuit de commutation selon l'une des revendications 1 à 9, qui comprend en outre un étage fictif $B_{S1}$, avec une capacité autant que possible égale à une capacité parasitaire, que la charge de référence fournie par le premier condensateur de référence ($K_{Ref1}$) absorbe proportionnellement.

11. Circuit de commutation selon l'une des revendications 1 à 9, pour lequel une ligne d'alimentation (VL) reliant le premier condensateur de mesure ($K_{M1}$) à l'entrée du premier amplificateur tampon ($OV_1$) comporte un blindage (GD) à protection active.

12. Capteur avec un circuit de commutation selon l'une des revendications 1 à 11.

13. Procédé destiné au réglage d'une tension de signalisation, qui représente momentanément une grandeur de mesure (p) physique variable, notamment une pression statique d'un fluide, lequel procédé comprend les étapes suivantes :

- Création d'un changement d'une capacité d'un condensateur de mesure ($K_{M1}$) correspondant à un changement de la grandeur de mesure (p),
- Décharge du condensateur de mesure ($K_{M1}$) à une charge résiduelle prédéfinissable,
- Génération d'une charge de référence sur un condensateur de référence ($K_{Ref1}$),
- Transfert de la charge de référence du condensateur de référence ($K_{Ref1}$) vers le condensateur de mesure ($K_{M1}$) pour la génération d'une tension de mesure représentant momentanément sa capacité, ainsi que
- Amplification de la tension de mesure avec un gain d'environ un pour la génération de la tension de signalisation.

14. Procédé selon la revendication 13, pour lequel la tension de signalisation est échantillonnée et bloquée temporairement pour la génération d'un signal de mesure ($X_p$) réagissant à la variation de la grandeur de mesure (p).

15. Procédé selon la revendication 13, pour lequel une tension de charge destinée à générer la charge de référence est appliquée au condensateur de référence ($K_{Ref1}$) jusqu'à ce qu'une tension de référence prédéfinissable chute par l'intermédiaire de ce condensateur.

16. Procédé selon la revendication 13, pour lequel la charge résiduelle, à laquelle le condensateur de référence ($K_{Ref1}$) est déchargé, est environ égale à zéro.

*Fig. 1*

Fig. 2

EP 1 412 703 B1

*Fig. 3*

EP 1 412 703 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 922962 A
- US 5001595 A
- US 5005421 A
- US 5050034 A
- US 5079953 A
- US 5194697 A
- US 5400489 A
- US 5539611 A